(19) Europäisches Patentamt
European Patent Office
Office européen des brevets

(11) Publication number: 0 337 695
A2

(12) # EUROPEAN PATENT APPLICATION

(21) Application number: 89303506.3

(22) Date of filing: 10.04.89

(51) Int. Cl.[4]: C09D 3/80

(30) Priority: 11.04.88 US 180056
11.04.88 US 180057

(43) Date of publication of application:
18.10.89 Bulletin 89/42

(84) Designated Contracting States:
DE FR GB IT

(71) Applicant: MINNESOTA MINING AND MANUFACTURING COMPANY
3M Center, P.O. Box 33427
St. Paul, Minnesota 55133(US)

(72) Inventor: Bilkadi, Zayn c/o Minnesota Mining and
Manufacturing Company 2501 Hudson Road
St. Paul Minnesota 55144-1000(US)

(74) Representative: Baillie, Iain Cameron et al
c/o Ladas & Parry Isartorplatz 5
D-8000 München 2(DE)

(54) **Abrasion resistant coatings comprising silicon dioxide dispersions.**

(57) Transparent abrasion resistant coatings capable of withstanding 1000 hours of accelerated weathering are comprised of colloidal silicon dioxide particles dispersed in ethylenically unsaturated aliphatic and/or cycloaliphatic monomers that are substituted by a protic group. The coatings are useful in protecting plastic, wood, metal and ceramic surfaces.

EP 0 337 695 A2

# ABRASION RESISTANT COATINGS COMPRISING SILICON DIOXIDE DISPERSIONS

## Field of the Invention

This invention relates to UV curable hard coating compositions and articles coated with such compositions. These coatings are comprised of the photoreaction products of liquid resins containing colloidal silicon dioxide dispersions in certain acrylate or methacrylate ester monomers or mixtures thereof. Said monomers preferably having substituted aliphatic or cycloaliphatic backbones having not more than 30 carbon atoms and wherein said substituents are protic functionalties capable of forming hydrogen and/or covalent bonds with silanol groups.

The coatings of the present invention are effective in protecting a variety of surfaces, including plastic, metal, wood, and ceramic surfaces.

This invention also relates to an energy curable coating composition comprising a dispersion of colloidal silica in a non-aqueous solution of a polyethylenically-unsaturated monomer. The invention further relates to substrates bearing an abrasion resistant cured coating of the composition.

## Background of the Art

The need for novel abrasion resistant coatings that are transparent and can withstand out-of-door weathering is for instance obviated by the ever increasing reliance on plastics as convenient substitutes for glass glazing in many out-of-door applications. Plastics, such as polyesters, polycarbonates and polymethacrylates are rapidly replacing glass in applications ranging from motorized vehicles and multistory buildings, to optical lenses for eyeglasses and precision instruments.

Although plastics have decided advantages over glass by virture of their lighter weight and increased shatter resistance, they suffer from two main drawbacks. They are much softer than glass and they are easily damaged by everyday exposure to abrasives, such as dust and cleaning equipment. They also can be severely damaged by environmental conditions such as exposure to solvents, to sunlight and to fluctuations in temperature and humidity.

It is no surprise therefore that considerable efforts have been made in the past to improve the durability of plastic articles to the dual effects of weathering and exposure to abrasives. The most commonly used method for improving the abrasion resistance of plastics is application of a top coat of a resin specifically formulated to be abrasion resistant. In most, if not all cases, the most desirable top coats for plastic articles are photochemically cured resins of high crosslink density. In particular, thermally cured protective coatings are not desirable for plastic substrates on account of the fact that the majority of thermosetting coatings require a heat cure cycle at temperatures which can cause thermal distortion or even degradation of the substrate.

Soft plastics are often protected from marring or scratching by application of a hardenable top coat especially formulated to be abrasion resistant. Examples of the most successful top coats for this purpose are certain room-temperature curing silicone resins derived from functionalized silane monomers, such as disclosed in U.S. Patent No. 4,049,861.

U.S. Patent Nos. 3,976,497; 3,986,997; 3,708,285; 4,368,236; 4,368,235; 4,478,876; and 4,491,508 disclose that the scratch resistance of polymers can be enhanced by coatings derived from hydrolyzable silanes and polymers derived from a combination of acryloxy-functional silanes and polyfunctional acrylate monomers. The scratch resistance of these polymers can be further enhanced by addition of colloidal silica. Most likely this improvement is due to a combination of two effects brought on by the addition of colloidal silicon dioxide particles: (1) the mere substitution of part of the soft silicone resin by the much harder inorganic oxide particles that are trapped in the polymer matrix and (2) changes in the mechanical properties of the coating as a result of the "crosslinking" effect of the inorganic oxide. Whatever the mechanism may be, the addition of colloidal silica to hydrolyzable silanes and functionalized silanes is a straightforward process because the polycondensation of the siloxane is carried out in the aqueous environment of the colloidal silica. There are, however, several drawbacks associated with the utilization of hydrolyzed silanes or functionalized silanes in the formulation of abrasion resistant coatings. The first is that the shelf-life of the partially hydrolyzed silanes is often limited due to the progressive gelling of the condensation polymer, as is documented in U.S. Patent No. 3,986,997 for example. Another drawback is that full cure of the silesquioxane to yield the highly crosslinked silicone matrix is often an extremely slow process that is only partially remedied by a catalyst or by heating. As a result of the slow cure kinetics,

silane based abrasion resistant coatings are often susceptible to shrinkage and ultimately to stress-cracking. Lastly, silane based hard coats suffer from poor adhesion to plastic substrates, such as polymethyl methacrylate, and require therefore some form of physical or chemical priming of the adherent surface.

Attractive alternatives to silane-based hard coats for protecting plastic substrates are compositions containing in polymerized form, one or more acrylate or methacrylate functionalities on a monomer, oligomer or resin. The popularity of acrylic or methacrylic based hard coats is due to at least three reasons: 1) they yield transparent films, and are therefore ideal for protecting substrates that need remain transparent, or possess a color that need to be visible, 2) for decorative or other functional reasons, they are easily cured at room temperature by exposure to U.V. or electron beam irradiation, which qualifies them as top coats for heat sensitive substrates, and 3) they are capable of yielding films with high crosslink density (and therefore high hardness) by virtue of the fact that more than one crosslinkable functionality may be attached to a given monomer or a given oligomer chain.

Abrasion resistant coating compositions based on multi functional acrylate or methacrylate monomers have been disclosed in the prior art. In U.S. Patent No. 3,968,305 there is described a plastic shaped article having a scratch-resistant polymer surface layer consisting of, in polymerized form, (a) 20 to 100 weight percent of a compound having a total of at least 3 acryloxy and/or methacryloxy groups linked with a straight chain aliphatic hydrocarbon residue and (b) 0 to 100 weight percent of at least one copolymerizable mono- or diethylenically unsaturated compound and (c) a crosslinking catalyst for thermal or U.V. radiation cure. In U.S. Patent 3,968,309 there is disclosed a mar-resistant coating composition comprising at least 30 percent by weight of at least one polyfunctional methacryloyloxy or acryloyloxy compound to which is added 0.01 to 5% by weight of a fluorine-containing surfactant.

In U.S. Patent Nos. 4,198,465 and 4,262,072 there are disclosed abrasion resistant coating formulations containing polyfunctional acrylate and/or methacrylate monomers having heterocyclic hydantoin groups in the backbone and capable of hardening by exposure to U.V. light.

Despite their advantages in so far as ease of crosslinking transparency, and hardness after cure, the abrasion resistance of top coats derived from polyfunctional acrylates or methacrylates still leaves much room for improvement, and is far inferior to the abrasion resistance of glass or most ceramic materials.

In U.S. Patent No. 4,499,217 there are disclosed thermoset resin liquid compositions containing colloidal silica that had been freed from water and redispersed in alcohol prior to mixing with the resins. An example of an acrylic resin is used. Although the dry cured film of this composition was reported to exhibit enhanced abrasion resistance, the curing conditions required for thermosetting resins in general, including those reported in U.S. Pat. No. 4,499,217 preclude them from being used as scratch-resistant coatings for the great majority of common plastic substrates. Depending on the nature of the thermosetting resin curing times ranging from half an hour to several hours at temperatures often well exceeding 100 °C are required. Such conditions are conducive to softening, distortion and/or degradation of commercially important plastics such as polymethyl methacrylate, polyesters, polyolefins, and polycarbonates. The compositions disclosed in this patent use polymerizable resins in order to achieve high molecular weights of the coating. No monomers are used.

Photocurable abrasion resistant coating compositions comprising a non-aqueous dispersion of colloidal silica in polyethylenically-unsaturated monomer or its use to provide substrates with an improved abrasion resistant coating have not been disclosed.

## SUMMARY OF THE INVENTION

It is an aspect of the present invention to provide compositions of stable, photocurable, silicone-free dispersions of colloidal silica in certain photocurable acrylate monomers. These UV curable silica organosols are clear, remain stable for periods of months when protected from light, and are derived from relatively inexpensive raw materials. When coated on plastic, wood, metal or ceramic substrates they exhibit excellent abrasion resistance and excellent resistance to degradation by weathering. Hence, it is another aspect of this invention to provide an improved abrasion resistant and weatherable coating for solid substrates, especially transparent substrates.

Another aspect of this invention is to provide a photocurable coating composition especially well suited as an abrasion resistant coating for transparent substrates.

In accordance with the present invention, there is provided a coating composition comprising colloidal silicon dioxide particles dispersed in a protic group-substituted ester or amide of acrylic or methacrylic acid, which composition upon the addition of a photoinitiator, coating onto a substrate, and curing by exposure to

actinic radiation provides coatings that are abrasion and weather resistant. There is also provided a process for preparing the coating composition.

These and other benefits may be accomplished herein by providing an energy curable coating composition comprising a substantially anhydrous dispersion of colloidal silica having a particle size of less than 100 nanometer (nm), preferably less than 75 nm, more preferably less than 50 nm in a solution of polyethylenically-unsaturated monomer, said composition preferably comprising by weight per part of polyethylenically-unsaturated monomer 0.1 to 2.5 parts (preferably 0.25 and 1.0 parts) colloidal silica, and 2 to 10 parts (preferably 4 to 5 parts) volatile nonaqueous solvent.

## DETAILED DESCRIPTION OF THE INVENTION

One coating composition of the invention is prepared by the process comprising the steps:

1) Providing a dispersion of one part by weight of colloidal silica particles, preferably having a particle size of less than 100 millimicrometers in diameter, in a dispersing medium comprising by weight 0 to 100 percent (preferably 0 to 70 percent) water and 100 to 0 percent, preferably 100 to 30 percent of an aliphatic alcohol having one to seven carbon atoms, preferably one to five carbon atoms and up to three ether oxygen atoms, the dispersing medium having a pH in the range of 2.5 to 7.0;

2) adding 0.1 to 10 parts, preferably 0.5 to 3 parts of one or more protic group-substituted esters or amides of acrylic acid having the general formula:

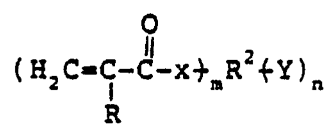

I

wherein

R is hydrogen, a lower alkyl group of 1 to 4 carbon atoms or halogen; preferably, hydrogen or methyl; X is -O- or $-NHR^1-$, in which $R^1$ is hydrogen or a lower alkyl group having one to four carbon atoms;

$R^2$ is a polyvalent saturated linear, branched or cyclic aliphatic group having carbon, hydrogen and, optionally ether oxygen atoms

and 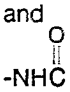 - groups and having a molecular weight of 14 to 1000 and a valence of m + n;

m is an integer designating the number of acrylic or methacrylic groups in the ester or amide having a value of one to five, preferably m has a value of 2 to 5 or where a mixture of acrylic or methacrylic compounds are used, m has an average value of 1.05 to 5;

n is an integer having a value of one to five; and

Y is a protic functional group capable of forming a hydrogen bond with lower aliphatic alcohols and with the silanol group of silanol group-containing compounds, the protic group, preferably selected from the group consisting of -OH, -COOH, $CONHR^3$, $-COONH_4$, -SH, $-NHR^3$, $-SO_3H$, $-SO_3NH_4$, $-PO(OH)_2$, and $-PO(ONH_4)_2$ in which $R^3$ is hydrogen or a lower alkyl group having 1 to 4 carbon atoms;

3) removing the water to obtain an anhydrous dispersion of colloidal silica in a protic group-substituted ester or amide of an acrylic acid.

In step 1) of the process for preparing the coating composition of the invention, there is provided a dispersion of colloidal silica in dispersion medium, preferably having an alcohol content of at least 30% by weight and the particle size of the silica is generally in the range of 5 to 30 millimicrons in diameter. These silica dispersions are prepared by methods well known in the art and are also available commercially under such trade names as "Ludox"TM (manufactured by E. I. duPont de Nemours and Co., Inc. Wilmington, Del, USA) or "Nalco" (manufactured by Nalco Chemical Co., Oak Brook, IL, USA). Although both alkaline and acidic forms of silica hydrosols are available commercially, only colloidal dispersions having a pH lower than 7 may be used, otherwise rapid saponification of the ester monomer would ensue. One excellent choice is "Nalco 1129" which is provided as colloidal silica dispersion in 60%/40% by weight isopropanol/water solution wherein the mean particle size is 20 millimicrons, the pH is 3.5 and the solid content is 30% by weight. Another excellent commercial starting material is "Nalco 1034A" available as a

silica hydrosol with mean particle size of 20 millimicrons, pH 3.2, and solid content 34% by weight. It should be obvious to those skilled in the art, however, that any silica hydrosol, including alkaline silica hydrosols, may be used as sources of silica particles for the embodiment of this invention as long as their pH is reduced to the pH range of 2.5 to 7.0, and as long as the dispersion in a dispersion medium containing 30 to 100% aliphatic alcohol produced from them is stable against settling of the silica.

In step 2) of the process for preparing the coating composition of the invention, the alcoholic dispersion is mixed with one or more protic group-substituted esters or amides of an acrylic acid, preferably as defined by Formula I.

Preferred polyethylenically-unsaturated monomers useful in this invention are the polyfunctional acrylate monomers of the general formula:

$$\left\{ H_2C = \underset{\displaystyle R}{\underset{|}{C}} - \overset{\displaystyle O}{\overset{||}{C}}O \right\}_n R^1$$

wherein:

R is hydrogen, halogen, lower alkyl group of 1 to 3 carbon atoms, or phenyl;

$R^1$ is a polyvalent organic group having a valence of n that is the residue of an organic polyol having n hydroxyl groups said residue formed by removal of n hydroxyl groups from the organic polyol, the organic polyol being selected from saturated linear, branched, and cyclic aliphatic polyols having 2 to 10 carbon atoms and optionally one to three catenary (i.e., backbone) oxygen atoms or

$-\overset{O}{\overset{||}{C}}O$-groups and from aromatic polyols having 6 to 12 carbon atoms; and

n is an integer having a value of 2 to 6.

Examples of the preferred polyethylenically-unsaturated monomers of use in the composition of the invention are the polyacrylic acid or polymethacrylic acid esters of polyhydric alcohols including, for example, the diacrylic acid and dimethacrylic acid esters of aliphatic diols such as ethyleneglycol, triethyleneglycol 2,2-dimethyl-1,3-propanediol, 1,3- cyclo pentanediol, 1-ethoxy-2-3-propanediol, 2-methyl-2 ,4 pentanediol, 1,4-cyclohexanediol, 1,6-hexamethylenediol 1,2- cyclohexane diol, 1,6-cyclohexanedimethanol; the triacrylic acid and trimethacrylic acid esters of aliphatic triols such as glycerin, 1, 2, 3-propanetrimethanol, 1,2,4-butane triol, 1,2,5- pentanetriol, 1,3,6-hexanetriol, and 1,5,10-decanetriol; the tetraacrylic and tetramethacrylic acid esters of aliphatic triols such as 1,2,3,4-butanetetrol, 1,1,2,2,-tetramethylolethane, 1,1,3,3,-tetramethylolpropane, and pentaerythritol tetraacrylate; the pentaacrylic acid and pentamethacrylic acid esters of aliphatic pentols such as adonitol; the hexaacrylic acid and hexamethacrylic acid esters of hexanols such as sorbitol and dipentaerythritol; the diacrylic acid and dimethacrylic acid esters of aromatic diols such as resorcinol, pyrocatechol, bisphenol A, and bis(2-hydroxyethyl) phthalate; and the trimethacrylic acid ester of aromatic triols such as pyrogallol, phloroglucinol, and 2-phenyl-2,2-methylolethanol; and mixtures thereof. Other polyethylenically-unsaturated monomers that can be used in the composition of the invention are diallyl phthalate, divinyl ether, 1,2-divinyloxyethane 1,4-(dicrotonyloxy)butane and the like.

Preferred protic group substituted esters useful in this invention are the acrylic acid and methacrylic acid esters of aliphatic polyhydric alcohols of the general formula:

$$\left\{ H_2C = \underset{\displaystyle R}{\underset{|}{C}} - \overset{\displaystyle O}{\overset{||}{C}}O \right\}_m R^2(OH)_n \qquad \text{II}$$

wherein R, $R^2$, m and n are defined above. Examples of such esters include 2-hydroxyethyl acrylate and methacrylate, 3-hydroxypropyl acrylate and methacrylate, 2-acryloyloxymethyl-2-hydroxymethylpropane, 2-methacryloyloxymethyl-2-hydroxymethylpropane, pentaerythritol mono, bis- and triacrylate, pentaerythritol mono-, bis-, and trimethacrylate, dipentaerythritol di-, tri-, tetra-, and pentaacrylate and methacrylate.

The above esters of polyhydric alcohols and their production are well known to those skilled in the art.

For example, one method of producing a hydroxyl substituted mono, di- or triacrylate ester is by reacting acrylic acid with excess di-, tri-, or tetrahydroxy compound. Thus, for example acrylic acid can be reacted with pentaerythritol to yield a mixture of the di-, tri-, and tetraacrylate ester from which the later compound can be extracted by well known techniques to leave only the di- and triester compounds useful in this invention.

Other protic group-substituted compounds useful in this invention have the general formula:

$A^1$--Z--$A^2$

in which $A^1$ and $A^2$ independently are poly(acryloyloxy)alkoxypropyl groups having the general formula:

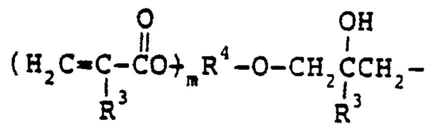

wherein:

Each $R^3$ is independently hydrogen atom or methyl group;

m is an interger of 1 to 5;

$R^4$ is the residue of an aliphatic polyol having (m+1) primary hydroxyl groups (said residue being formed by the removal of hydroxyl groups from the polyol) and containing 1 to 10 carbon atoms, preferably one to two quaternary carbon atoms, a valence of (m+1), and optionally one ether oxygen atom, most preferably an alkanol residue; and

Z is a heterocyclic group of the formula:

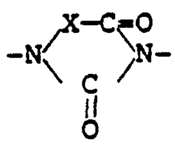

wherein:

X is a divalent group which is required to complete a five or six membered heterocyclic ring, preferably X is

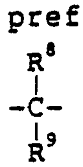 but X can be 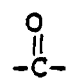, 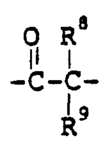, 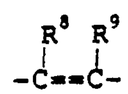, 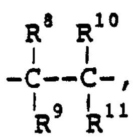, or

- 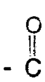 -N-$A^3$ wherein $R^8$, $R^9$, $R^{10}$ and $R^{11}$ are independently hydrogen or lower (1 to 12 carbon atoms) alkyl, preferably methyl, cycloalkyl (3 to 6 carbon atoms) or a phenyl group (preferably up to 16 carbons and most preferably up to 10 carbons atoms) and $A^3$ is as defined above for $A^1$ and $A^2$; in $A^1$, $A^2$, and $A^3$, is preferably 3.

The synthesis of the above poly(ethylenically unsaturated alkoxy)hydantoin compounds has been described in detail in U.S. Pat. 4,262,072. One route is the Lewis acid catalyzed reaction of ethylenically unsaturated primary hydroxy compounds with N-glycidyl substituted hydantoin compounds.

In the practice of the present invention, the acrylate monomers are first dissolved in a lower aliphatic alcohol such as ethanol or isopropanol to form a 20 to 40% solution which is then added to the colloidal silica dispersion and the solvents subsequently removed, as for example by distillation.

The protic substituents on the aliphatic residues of the acrylate monomers conforming to formula I assure the solubiltiy of the acrylate esters and amides in alcohol and the formation of a stabilizing adsorptive layer of the said acrylate esters on the silica particle surface.

Examples of still other protic group-substituted esters and amides that can be used in the coating composition are the reaction product of diglycidyl ethers and esters with acrylic and methacrylic acid such as 2,2-bis[4-(3-acryloyloxy-2-hydroxypropoxy)phenyl]propane; the acryloyloxy and methacryloyloxy substituted aliphatic carboxylic acids such as 2-acryloyloxyacetic acid and 2-methacryloyloxyacetic acid; the ammonium and amine salts of these acids such as ammonium 2-acryloyloxyacetate and ammonium 2-methacryloyloxyacetate; the amides of these acids such as 2- acryloyloxyacetamide and 2-methacryloyloxyacetamide; acryl- and methacrylamido substituted aliphatic carboxylic acids, their ammonium salts and amides such as 2-acrylamidoacetic acid and 3-methacrylamidopropionic acid; the polyacryloyloxy- and polymethacryloyloxy-substituted mono and polycarboxylic acids such as 2,3-bisacryloyloxypropionic acid, 2-methacryloyloxy succinic acid, and 2,3-bisacryloyloxysuccinic acid; the acrylic and methacrylic esters and amides of mercapto-aliphatic alcohols and amines such as 2-mercaptoethyl acrylate and methacrylate, N-(2-mercaptoethyl)acrylamide and N (2-mercaptoethyl)methacrylamide; the acryl- and methacrylaminoalkanols and alkylamines such as 2-acrylaminoethanol and 2-methacrylaminioethylamine; the acryloyloxy- and methacryloyloxy aliphatic sulfonic acids such as 2-acryloyloxyethanesulfonic acid and its ammonium salt; and the acryloyloxy- and methacryloyloxy aliphatic phosphonic acids such as acryloyloxyethanephosphonic acid and its ammonium salt.

In step 3) of the process for preparing the coating composition of this invention, the alcohol-water solvent is completely removed from the mixture prepared in step 2) above. Suitable methods for removing the water-alcohol solvent are, for example, simple distillation or vacuum distillation. When all the water-alcohol is thus removed at temperatures between 65° C and 85° C, stability of the organosol is assured by the so-called "steric hindrance" effect whereby a layer of strongly adsorbed substituted acrylate monomers shields each silica particle and prevents it from agglomerating with other particles.

The non-protic group substituted ester compositions of the invention can be diluted with up to 6 parts, preferably 1 to 2 parts, by weight per part of poly ethylenically-unsaturated monomer of any monoethylenically-unsaturated monomer copolymerizable with the polyethylenically unsaturated monomer. Generic classes of useful comonomers include acrylic acid and methacrylic acids, esters and anhydrides; ethylenically unsaturated anhydrides, olefins, acrylamides; ethylenically unsaturated ureas and urethanes; vinyl esters, vinyl ethers, vinyl halides, vinyl epoxy resins, vinyl silanes and siloxanes, vinyl heterocycles, and prepolymers and polymers of these materials. Particularly suitable monoethylenically-unsaturated monomers include methyl methacrylate, ethyl acrylate, styrene, butadiene, 2-chlorostyrene, 2,4-dichlorostyrene, acrylic acid, acrylamide, acrylonitrile, t-butyl acrylate, methyl acrylate, butyl acrylate, N-vinyl pyrrolidone, 2-(N-butylcarbamyl)ethyl methacrylate 2-(N-ethylcarbamyl)ethyl methacrylate, and 1,3,5-tri(2-methacryloxyethyl )-s-triazine.

Colloidal silicas of use in the composition of the invention are well known and prepared by methods well known in the art. Colloidal silicas in water or water-alcohol solutions are available commercially under such trade names as LudoxTM (manufactured by E. I. duPont de Nemours and Co., Inc., Wilmington, DE, USA) or NalcoTM (manufactured by Nalco Chemial Co., Oak Brook, IL, USA). Although both alkaline and acidic forms of silica hydrosols are available commercially, only colloidal dispersions having a pH lower than 7 and preferably lower than 4 may be used, otherwise rapid flocculation would ensue. One excellent starting material is NalcoTM 1129 which is provided as colloidal silica dispersion in 60%/40% by weight isopropanol/water solution wherein the mean particle size is 20 millimicrons, the pH is 3.5 and the solid content is 30% by weight. Another excellent commercial starting material is Nalco 1034A available as a silica hydrosol with mean particle size of 20 millimicrons, pH 3.2, and solid content 34% by weight. It should be obvious to those skilled in the art, however, that any silica hydrosol, including alkaline silica hydrosols, may be used as sources of silica particles for the embodiment of this invention as long as their pH is reduced to the 2.5-7.0 range.

The separation of the aqueous colloidal silica from the water and its transfer to a volatile non-aqueous solvent that is compatible with the class of polyacrylates described above may be effected by first adding a water-miscible organic solvent A and removing the water. If the water miscible solvent A has a boiling point higher than that of water, the water can be removed by simple distillation. If the water miscible solvent A has a boiling point lower than that of water, the water can be removed by azeotropic distillation. It is preferable that the water be removed as rapidly as possible and at as low a temperature as possible. Consequently, it is preferable to conduct the distillation under vacuum. This procedure is also disclosed in U.S. Patent No. 4,499,217.

Preferably the water-miscible solvents of use in the dehydration of the colloidal silica are protic group containing solvents such as the lower alcohols having 1 to 4 carbon atoms, lower glycols having 2 to 6 carbon atoms and ether oxygen, and most preferably lower glycol ethers having 3 to 6 atoms and 1 to 2 ether linkages. Specific examples are methanol, ethanol, 2-propanol, n-butanol, t-butyl alcohol, ethylene glycol, methoxyethanol, ethoxyethanol, and propoxyethanol, butoxyethanol, methyl "Carbitol", and ethyl "Carbitol" and mixtures of any combination thereof. The use of these protic solvents allow the dehydradation to be carried out to the point where water is substantially all removed. For example use of propoxy ethanol in the vacuum distillation of water from acidic colloidal silica allows the dehydration to proceed to less than 1% residual water in the remaining alcoholic dispersion. In this manner up to 65% by weight colloidal silica dispersions in propoxyethyl alcohol may be easily prepared.

Non-protic water-miscible solvents that can also be used in the dehydration of colloidal silica are aliphatic esters and ketones such as ethyl acetate, propyl acetate, butyl acetate, methoxyethyl acetate, ethoxyethyl acetate, propoxyethyl acetate, butoxyethyl acetate, triethyl phosphate, methyl ethyl ketone and methyl propyl ketone. However, in the majority of cases where a water-miscible ester or ketone has to be used, it is preferred to have an alcohol present even as a minor component during the dehydration step. Thus 90/10 mixtures of alcohol in the acetates or ketones mentioned above is often suitable. The photocurable compositions also contain appropriate photosensitizers specially formulated to effect crosslinking either in air or in inert atmosphere, such as nitrogen. In general the amount of photosensitizer may vary from about 0.01 to 10% by weight of the total polymerization composition. When the quantity is less than 0.01% by weight, the polymerization rate becomes extremely low. If the initiator is used in excess of 5% by weight, no correspondingly improved effect can be expected. Thus addition of such greater quantity is economically unjustified. Preferaly, about 0.25 to 4.0% of initiator is used in the polymerizable composition.

The compositions of the present invention may generally be described as containing

(a) 5-75% by weight of colloidal silica (the liquid phase having less than 3% by weight water present, this being the definition of "water-free")

(b) at least 5% by weight of a polymerizable polyacrylate,

(c) at least 15% by weight of polymerizable acryloyl (including the polyacrylate),

(d) 0.1 to 10% by weight of a free radical initiator (including both thermal and photo initiated systems), and

(e) zero to 25% by weight of a compatible filler or binder resin soluble in the solution of the polyethylenically unsaturated monomers.

Preferably the composition comprises 10-70% water-free silica sol, most preferably 30-70% water-free silica sol; 5-90% polyacryloyl compound, most preferably 30 to 70% polyacryloyl compound; 5-90% acryloyl monomer (including mono- and polyacryloyl), 0-20% compatible filler resin, and 0.5 to 7% photoinitiator system in a solvent carrying medium. The viscosity and percent solids of the composition may be adjusted by addition of one or more of the aforementioned volatile, nonaqueous protic or non-protic solvents.

These compositions are particularly useful when applied to substrates that would show adverse effects if subjected to 100 °C for more than 15 minutes, and preferred for substrates that would show adverse effects when exposed to 80 °C for 15 minutes. Such adverse effects would include discoloration, shrinkage, warping, imaging, or permanent change in physical or chemical properties.

One important advantage of redispersing the colloidal silica in the said acrylate monomers is the ability to work with a so-called solventless system, thereby eliminating the need for potentially cost-adding pollution abatement measures required to dispose of the solvent. However, the photocurable compositions of this invention may easily be diluted with ketones or alcohols.

The crosslinkable silica organosols thus obtained may be diluted with up to 3 parts by weight of any ethylenically unsaturated monomers having saturated aliphatic or cycloaliphatic residues. In particular, it is not necessary that these monomeric diluents have protic substitutents on their aliphatic residues. Preferably, the majority of comonomers are at least diethylenically unsaturated monomers. Generic classes include the acrylates, methacrylates, acrylic anhydrides, acrylated alkoxysilanes and siloxanes, ethylenically unsaturated anhydrides, acrylamides, ethylenically unsaturated amides and urethanes and acrylated epoxies. Particularly suitable ethylenically unsaturated monomers include hexamethylene diacrylate and dimethacrylate, glycerol diacrylate and methacrylate, trimethylolpropane triacrylate, neopentylglycol diacrylate, pentaertythritol tetraacrylate and tetramethacrylate, dipentaerythritol hexaacrylate, 1,3,5-tri(2-methacryloxyethyl)-s-triazine, glycidyl acrylate and methacrylate, and functional silanes such as
3-methacryloxypropyltrimethoxysilane,
3-acryloxypropyltrimethoxysilane,
2-methacryloxyethyltrimethoxysilane,
2-acryloxyethyltrimethoxysilane,
3-methacryloxypropyltrimethoxysilane,
3-acryloxypropyltriethoxysilane,
2-methacryloxyethyltriethoxysilane, and
2-acryloxyethyltriethoxysilane.

Preferably 20 to 85% and most preferably 45 to 60% by weight of copolymerizable components comprise the protically substituted acrylate monomers of the coating composition of the invention.

Other agents that can be incorporated in the composition of the present invention include flatting

agents, surface active agents, protic solvent soluble organic polymers, dyes, and especially UV light stabilizers including hindered amines derived from substituted piperidines or triazoles.

The photocurable compositions also contain appropriate photosensitizers specially formulated to effect crosslinking either in air or in inert atmosphere, such as nitrogen. In general the amount of photosensitizer may vary from 0.01% to 10% by weight, but for thin films 4% -5% by weight is preferred.

For photocuring thin film coatings of the compositions in air, suitable photosensitizers consisting of mixtures of ketone type and hindered amine type compounds are used. Among the preferred ketones are benzophenone, acetophenone, benzil, benzaldehyde and o-chlorobenzaldehyde, xanthone, thioxanthone, 9,10-anthraquinone, and many other aromatic ketones. Among the preferred hindered amines are methyldiethanolamine, ethyldiethanolamine, dimethylethanolamine, diethylethanolamine, triethanolamine, phenylmethylethanolamine, dimethylaminoethylbenzoate, and others. Preferred ratios by weight of ketone to amine are between 80/20 and 20/80, but in general ratios of 50/50 to 60/40 are satisfactory.

For effecting photocure in inert environments, such as nitrogen or argon, many commercially available photosensitizer compounds are known, among which those known under the trade name IrgacureTM - (available from Ciba-Geigy Co.), for example Irgacure 184.

UV irradiation at dosages of from 1 megarad to 100 megarad or more are used. The UV radiation used may have a wavelength ranging from 18.5 to 400 nm. Suitable sources of radiation include mercury, xenon, carbon arc and tungsten filament lamps, sunlight, etc.

## SUBSTRATES

Although the substrates of soft plastic sheet material show the greatest improvement upon appliction of the coating, the composition can be applied to other substrates, such as wood, ceramics, leather, metals, printed surfaces, marble, and textiles. The substrates may be substantially any form, such as sheets, films, fibers, fabrics, and shaped solid objects. Amongst the substrates having particular advantages with coatings of the present invention are polymeric resins, including both thermoplastic and thermoset resins (e.g. polyesters, polyethers, polyamides, polyurethanes, polyacrylates, polyolefins, polyvinyls, cellulose esters, epoxy resins, phenolic resins, polysiloxanes, polystyrene, copolymers of acrylonitrile-styrene, butyrates, and the like). Suitable substrates are also ceramics, including glass, fused ceramic sheeting, marble, wood, leather, textiles, and printed or imaged surfaces. The coatings are useful particularly on refractive surfaces, such as prisms and lenses, and reflective surfaces, such as street signs, mirrors, etc. They are also useful on metallized polymeric film which is transparent and used as a light screen on windows. Particularly useful substrates for application of the present invention would be those requiring transparent protective coatings. Finished photographic prints, and films, paintings, transparencies, car windshields, instant film, photothermographic and thermographic paper and film, photoconductive substrates, opthalmic lenses, polarizing elements, liquid crystal displays, motion picture film, street and traffic signs, reflective surfaces, retroreflective surfaces, traffic lights, and many other surfaces are usefully coated according to the practice of the present invention.

Although the coating compositions of this invention are such that they yield highly adhering protective films on most substrate surfaces, separate primer compositions, comprising a single ingredient or mixture of ingredients, may he used to improve the bond of the coating to the substrate. Texturizing, chemical, or physical treatment of the surface may also be used to improve bonding. The coatings of this invention are generally between 0.5 and 500 microns thick, preferably between 1 and 50 microns, and most preferably between 3 and 25 microns.

Objects and advantages of this invention are further illustrated by the following examples, but the particular materials and amounts thereof recited in these examples, as well as other conditions and details, should not be construed to unduly limit this invention.

## Example 1

In a 500 ml round bottom flask was dissolved 90g of pentaerythritol triacrylate (PETA) in 100g ethanol. To this solution was added with agitation 150g Nalco 1129 colloidal silica (sold as 30% by weight $SiO_2$ solids in 40/30 isopropanol/water at pH 3.5). A free radical inhibitor was added (0.1g of a 1% ethanolic solution of phenothiazine). The round bottom flask was then attached to a Buchi 011 Rotavap and the alcohol-water removed by distillation at 47°C under vacuum until a very thick but clear gel was obtained.

The gel was redissolved in 300g of anhydrous ethanol and the distillation carried out for a second time at 47°C until crystal like deposits appeared on the side of the flask. In a third step, the powder was redissolved in 300g of anhydrous ethanol and distillation carried out for a third and final time at 47°C until no further solvent could be extracted. The temperature was then raised to 85°C for half an hour and the resulting residue was a clear, anhydrous, highly viscous organosol that weighted 99g. The silica content of this organosol (heretofore called Compound A) was 66.6% by weight.

10g of A were mixed with 30g of anhydrous ethanol, 0.2g of Tinuvin™ 770, an ultraviolet light stabilizer (Ciba-Geigy Corp.), and 0.2g of Irgacure™ 184 (Ciba-Geigy Co.) photoinitiator. The resulting clear dispersion was coated on a 4 mil thick unprimed polyethylene terephthalate (PET) film manufactured by Minnesota Mining and Manufacturing using a #9 Meyer rod (a wire-wound drawdown rod manufactured by RD Specialities, Rochester, N.Y.). Upon evaporation of the solvent the coating was cured by irradiation under nitrogen gas in a UV Processor, Model No. QC 120N/A (manufactured by Radiation Polymer Co.) at a rate of 80ft/minute (27m/min) under a 165 watts/centimeter high pressure mercury lamp. The cured layer exhibited 95-100% cross-hatch adhesion (ASTM D 3359-83).

Abrasion tests were performed on 7.5 cm diameter disks using the Taber Abraser Model 503 equipped with CS 10F wheels which are resurfaced every 100 cycles by abrading for 10 cycles on S-11 refacing disks. Each abrasing wheel supports a 500g weight during operation. The haze measurements were performed on a Gardner Hazemeter equipped with a motorized rotating disk support. The percent change in haze on the wear track is the average reading over a full rotation of the disk. Results of the abrasion tests are shown in Table II.

Accelerated weathering tests were performed with an Atlas Weather-O-Meter Type XW and a QUV Weathering Tester according to ASTM Specifications #G-23 Type E and #G-53 respectively. In #G-23 Type E weathering procedure, the sample is repeatedly cycled through 108 minutes of Sunshine Carbon Arc light exposure and 18 minutes of Sunshine Carbon Arc light exposure together with deionized water spray. In the #G-53 procedure every 8 hours of fluorescent light exposure is followed by 4 hours of deionized water condensation. Resistance to weathering was evaluated by visual inspection of the coating surface and by measuring the cross-hatch adhesion of the coating after 1000 hours exposure to light and moisture. The latter test involved rapid 180 degrees pull of an aggressive pressure sensitive adhesive tape (3M #610 tape) on a crisscrossed pattern on the coating consisting of twenty 5mmx5mm squares. Results of these tests are shown in Table II.

## Examples 2, 3 and Comparative Example X

Example 1 was repeated using ratios of PETA and Nalco 1129 to provide PETA/silica compositions having a silica content of 50% and 33.3% respectively for Examples 2 and 3 and zero percent silica for comparative example X. Coating compositions were prepared for each example, coated onto PET film, and the cured coatings evaluated as in Example 1. The results are shown in Table I. The result with uncoated polyester film (PET) is also shown in Table I.

TABLE I

| Ex. No. | Composition | | Haze% (Cycles) | | | X-Hatch Adhesion* | Weathering Visual Inspection* |
|---|---|---|---|---|---|---|---|
| | % PETA | $\%SiO_2$ | (100) | (500) | (1000) | | |
| 1 | 66.6 | 33.3 | 2.7 | 8.9 | 18 | 95-100 | Smooth |
| 2 | 50 | 50 | 2.1 | 5.7 | 8.1 | 95-100 | Smooth |
| 3 | 33.3 | 66.6 | 2.1 | 7.3 | 10.1 | 95-100 | Fair |
| X | 100 | 0 | 2.4 | 11.2 | 23.1 | 5 | Cracked |
| Uncoated polyester 26.1 | | | | | | | |

* After 1000 hours of weathering by #G-23 Type E procedure according to ASTM D-3359-83

## Example 5

One part of Compound A was diluted with 2 parts by weight ethanol and mixed with 0.02 parts by weight benzophenone and 0.02 parts by weight dimethylethanolamine. The resulting clear liquid was coated using #9 Meyer bar on 75 micrometer thick unprimed polyethylene terephthalate sheets (manufactured by Minnesota Mining and Manufacturing), dried at room temperature, and then UV cured in air at the rate of 12.7 cm/sec without need for a nitrogen gas blanket. The hardened coating exhibited exactly the same abrasion resistance and cross-hatch adhesion after weathering as Example 1.

## Example 6

50g of Compound A and 1.5g of Irgacure™ 184 were mixed thoroughly with 50g of trimethylolpropane triacrylate (TMPTA). The resulting mixture was a clear, stable sol having a viscostiy of 75,000 centipose.

One part of the above mixture was added to two parts of methyl ethyl ketone. The resulting clear dispersion was coated on a 4 mil thick unprimed polyethylene terephthalate film manufactured by Minnesota Mining and Manufacturing using a #9 Meyer rod. Upon evaporation of the solvent the coating was radiation cured under a nitrogen gas blanket as in Example 1. The cured layer exhibited 95-100% cross-hatch adhesion as opposed to 65% cross-hatch adhesion of unmodified TMPTA. The cured layer exhibited superior abrasion resistance and weatherability as shown in Table I.

## Examples 7-18

Example 6 was repeated using the substrates listed in Table II. In all cases excellent cross-hatch adhesion and resistance to chemical etching by methylene chloride were observed. The results are shown in Table II.

TABLE II

| Example No. | Substrate | Haze (%) | X-hatch Adhesion | $CH_2Cl_2$ Rub[a] |
|---|---|---|---|---|
| 7 | Polyester(PET) | 2.1-2.7 | 95-100% | Pass |
| 8 | Primed PET | 2.1-2.7 | 95-100% | Pass |
| 9 | Poly(methylmethacrylate) | 2.1-2.7 | 95-100% | Pass |
| 10 | Poly(vinylchloride) | 2.1-2.7 | 95-100% | Pass |
| 11 | Epoxy[b] | 2.1-2.7 | 95-100% | Pass |
| 12 | Corona treated polyethylene | 2.1-2.7 | 65-80% | Pass |
| 13 | Nylon 66 | 2.1-2.7 | 95-100% | Pass |
| 14 | Glass | 2.1-2.7 | 95-100% | Pass |
| 15 | Polyurethane | 2.1-2.7 | 95-100% | Pass |
| 16 | Aluminum | - | 95-100% | Pass |
| 17 | Wood | - | 95-100% | Pass |
| 18 | Brass | - | 95-100% | Pass |

(a) The cured coating was rubbed with a cheese cloth wet with methylene chloride. The coating passed the test when no damage to the coating could be observed.

(b) Polymer obtained by polymerization of diglycidyl ether of Bisphenol A using 0.25% $SbF_5$

## Example 19

Hydroxyethyl acrylate (66.7g) were added to 444g of Nalco 1129 colloidal silica and the low boiling liquids (water and isopropanol) removed at 80° C using a Bucchi Rotavap. The residual silica organosol (designated Compound B), was a colorless viscous liquid weighing 200g. that was 66.6% by weight colloidal silica and 33.3% by weight hydroxyethyl acrylate.

One part of Compound B was mixed with one part pentaerythritol triacrylate, 0.02 parts Irgacure 651 photoinitiator, and 0.02 parts TinuvinTM 236, an ultraviolet radiation stabilizer (Ciba-Geigy). The mixture was diluted with two parts by weight methyl ethyl ketone and coated on a 5 mil thick LexanTM polycarbonate sheet using a #9 Meyer rod. UV cure was effected at 30.5 cm/sec in a nitrogen atmosphere under high pressure lamps. The hardened film withstood 1000 hours of accelerated weathering on the Wether-0-Meter using the procedure described in Example 1. The coating also exhibited 100% cross-hatch adhesion and 3.9% Taber haze after 100 cycles on the Taber Abraser using CS10F abraser wheels. Each abrasing wheel supported a 500g weight during operation.

## Examples 20-22

Five hundred grams of NalcoTM 1034A (an aqueous colloidal silica having a pH of 3.5 and a solids content of 30%) was concentrated at 55° C in a roto-evaporator to 300g. The concentrate was diluted with 1200g n-propanol and the solution obtained added over a period of thirty minutes to the still pot of a distillation apparatus containing 900g of refluxing n-propanol. There distilled an azeotrope of water and n-propanol at 88° C. Distillation was continued until the still head temperature increased to 97° C. There remained in the still pot 650g of clear silica alcosol that had a silica content of 23% and analyzed less than 1% water.

A solution in n-propanol was made to contain 23% by weight of SRTM351 (trimethylolpropane triacrylate available from Sartomer Corp.) and 4% by weight based on weight of SR 351 of IrgacureTM 184, a photoinitiator available from Ciba-Geigy Co. Coatings containing 66.6, 50.0, 33.3 and 0% colloidal silica were prepared for Examples 20, 21, 22 and CI (a comparative example, illustrating the prior art) by mixing one part of the triacrylate solution with 2, 1, 1/2, and 0 parts of the alcosol and coating the solution onto a 100 micrometer thick film of unprimed polyethylene terephthalate (PET) using a #10 Meyer rod. On evaporation of the solvent, the coatings were radiation cured in air in a UV Processor, Model No. Q.C. 120N (manufactured by Radiation Polymer Co.) at a rate of 30 meters per minute under a 165 watts per centimeter high pressure mercury lamp. The cross-hatch adhesion (ASTM D3359-83) Taber Haze, and resistance to steel wool of each coating is given in Table III.

The abrasion tests were performed on a 3" diameter disks using the Taber Abraser Model 503 equipped with CS IOF wheels which are resurfaced every 10 cycles by abrading for 10 cycles on S-11 refacing disks. Each abrasing wheel supported a 500g weight during operation. The percent haze measurements were performed on a Gardner Hazemeter equipped with a rotating disk support. The percent haze on the wear track is the average reading over a full rotation of the disk.

TABLE III

| | | | Abrasion Resistance | | | | ASTM D3359-83 |
|---|---|---|---|---|---|---|---|
| Ex. No. | Composition (%) | | Taber Haze % (Cycles) | | | | X-hatch % |
| | SR 351 | $SiO_2$ | (100) | (500) | (1000) | Steel Wool | |
| 20 | 33.3 | 66.6 | 2.7 | 8.9 | 18 | Excellent | 95-100 |
| 21 | 50 | 50 | 2.1 | 5.7 | 8.1 | Excellent | 95-100 |
| 22 | 66.6 | 33.3 | 2.1 | 7.3 | 10.1 | Excellent | 95-100 |
| CI | 100 | 0 | 2.4 | 11.3 | 23.1 | Fair | 45-50 |
| | Uncoated | | 26.1 | -- | -- | Poor | -- |

## Example 23

To 32.6g of trimethylolpropane triacrylate were added 66g of methyl ethyl ketone and 1.39 of IrgacureTM 184 photoinitiator (called Solution A). One part by weight of this solution was mixed with one part of a 30% by weight dispersion of colloidal silica having a particle size of 25 nm in 2-propoxyethanol. The resulting clear mixture was used to coat a 100 micrometer thick sheet of unprimed polyethylene terephthalate using a #9 Meyer bar. After drying and curing as described in Examples 20-22, the cured film exhibited 95-100% crosshatch adhesion and an average percent haze of 100% after 1000 abrasion cycles.

## Example 24

To one part of Solution A (described in Example 23) was mixed 0.5 parts by weight of the colloidal silica used in Example 23 and the resulting clear dispersion coated onto 1.5 mm thick LaxanTM polycarbonate sheets using a #9 Meyer bar. After drying and curing the coating as described in Examples 20-22. The coated sheets were divided into two groups. The first group was soaked in distilled water at room temperature for 12 hours, and then dried in an oven at 55 °C for one hour. The dried coating exhibited a 95-100% cross-hatch adhesion and an average percent Taber haze of 15.2 after 1000 cycles. The second group of coated sheets were not soaked. The coating exhibited 95-100% cross-hatch adhesion to the polycarbonate and an average Taber haze of 15.0 after 1000 abrasion cycles.

## Example 25

One part by weight hexanediol diacrylate, one part ethoxylated trimethylolpropane triacrylate (SR 454, Sartomer Corporation), 0.1 part TinuvinTM 770, a hindered amine type ultraviolet light stabilizer derived from a substituted piperidine, (available from Ciba-Geigy Corp.); and 0.02 parts Irgacure 184 were dissolved in 4.5 parts n-propanol and part of the solution used to coat four sheets of 100 micrometer thick polyethylene terephthalate film with a No. 12 Meyer rod. After drying and curing in the UV Processor as in Example 20, the hardened coating exhibited 45-55% cross-hatch adhesion and an average % Taber haze of 12 after 300 abrasion cycles.

One part by weight of the above mixed solution was added to one part of the silica colloid prepared in Examples 20-22. The resulting clear dispersion was coated on four polyethylene terephthalate sheets with a No. 12 Meyer Rod. After drying and curing in the UV Processor as in Examples 20-22, the hardened coating exhibited 95-100% cross-hatch adhesion and an average percent Taber haze of 7.2 after 300 abrasion cycles.

## Example 26

One part by weight ethoxylated trimethylolpropane triacrylate, one part methyl methacrylate, 0.25 part CarbosetTM 531 (polyacrylic acid resin) available from B. F. Goodrich, and 0.09 part of a photoinitiator composed of equal amounts of benzophenone and methyldiethanolamine were dissolved in 10 parts ethanol. One part by weight of this solution was mixed with one part of the colloidal silica used in Example 23 to form a clear but relatively viscous mixture. The clear syrupy dispersion was coated on 100 micrometer thick unprimed polyester film and dried to provide a 5 micrometer thick film. The coating was then dried and cured in air in the UV Processor by one pass at 12m/min. The cured film was flexible and did not crack upon folding the polyester substrate upon itself. It exhibited 95-100% cross-hatch adhesion and 2-5% Taber haze after one hundred abrasion cycles.

The term polyacryloyl monomer is defined to include both conventional polyacryloyl monomers (e.g., with molecular weights of less than 500) and polyacryloyl oligomers (with molecular weights of less than about 10,000). Oligomers tend to be more viscous, but are still easily coatable, particularly in combination with the lower molecular weight (less than 500 mw) monomers. The oligomers, as is well understood in the art usually comprise a polymer backbone having a number of acryloyl (methacryloyl) substituents pendant therefrom. The oligomer may constitute from 0 to 100% of the monomer and be present as from 0 to 95%

of the total composition.

Either aliphatic, aromatic or heterocyclic bridging groups (or combinations thereof) may be present in the monomer, but aliphatic groups are clearly preferred for their improved weathering properties.

## Claims

1. A coating composition curable to an abrasion and weather resistant coating comprising a non-aqueous dispersion of colloidal silicon dioxide particles of diameters less than 100 millimicrometers in a protic group-substituted ester or amide of acrylic or methacrylic acid.

2. The coating composition of Claim 1 wherein the colloidal silicon dioxide is present at a concentration of 30 to 70 percent by weight and the protic group-substituted ester or amide is present at a concentration of 70 to 30 percent by weight and a degradation resistance improving amount of an ultraviolet radiation stabilizer.

3. The coating composition of Claim 1 wherein the protic group of the protic group-substituted ester or amide of acrylic or methacrylic acid is selected from the group consisting of -OH, -COOH, $-CONHR^3$, $-COONH_4$, -SH, $-NHR^3$, $-SO_3H$, $-SO_3NH_4$, $-PO(ONH_4)$ in which $R^3$ is hydrogen or an alkyl group having 1 to 4 carbon atoms.

4. The coating composition of Claim 1 wherein the protic group-substituted ester or amide of acrylic acid is one or more compounds having the general formula:

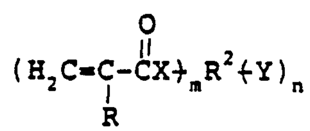

wherein

R is hydrogen, a lower alkyl group having 1 to 4 carbon atoms or halogen;

X is -0- or $-NHR^1$ in which $R^1$ is hydrogen or a lower alkyl group having 1 to 4 carbon atoms;

$R^1$ is a polyvalent saturated linear, branched, or cyclic aliphatic group having carbon, hydrogen, and optionally ether oxygen atoms and -NHCO- group and a molecular weight of 14 to 1000 and a valence of m+n;

$R^2$ is a polyvalent saturated linear, branched or cyclic aliphatic group having carbon, hydrogen and optionally ether oxygen atoms and a molecular weight of 14 to 1000 and a valence of m+n;

m and n are independently integers having a value of one to five; and

Y is a protic functional group capable of forming a hydrogen bond with lower aliphatic alcohols and with the silanol group of silanol group containing compounds.

5. The coating composition of Claim 2 wherein the protic group-substituted ester or amide of acrylic acid is one or more compounds having the general formula:

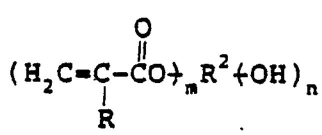

wherein

R is hydrogen, a lower alkyl group or halogen;

$R^2$ is a polyvalent saturated linear, branched or cyclic aliphatic group having carbon, hydrogen and optionally ether oxygen atoms and a molecular weight of 14 to 1000 and a valence of m+n;

m is an integer having a value of one to five; and

n is an integer having a value of one to five.

6. The composition of Claim 5 wherein the protic group-substituted ester or amide of acrylic or methacrylic acid present in the mixture is 20 to 85 weight percent of the total weight of both protic group substituted and unsubstituted ester or amide of acrylic or methacrylic acid and the ester or amide of acrylic or methacrylic acid unsubstituted by a protic group present in the mixture is 80 to 15 weight percent of the total weight of both protic group-substituted and unsubstituted ester or amide of acrylic or methacrylic acid.

7. A coating composition comprising by weight:

a) 5-75% substantially water-free colloidal silica,

b) 5-95% acryloyl monomer, of which at least 5% of the total composition comprises a polyacryloyl monomer,

c) 0.1 to 10% of an initiator comprising a free radical photoinitiator system, and

d) 0-25% of a compatible filler resin.

8. The composition of claim 1 wherein there is 0.1 to 2.5 parts by weight of colloidal silica to one part by weight of polyethylenically-unsaturated monomer.

9. The composition of claim 2 further comprising a polyethylenically unsaturated crosslinking agent in an amount sufficient to effect crosslinking of the composition.

10. The composition of claim 1 wherein the polyacryloyl monomer is a polyfunctional acrylate monomer having the general formula:

$$\left\{ H_2C = \underset{\substack{|\\ R}}{C} - \overset{\substack{O\\ ||}}{C}O \right\}_n R^1$$

wherein

R is hydrogen, halogen, lower alkyl group of 1 to 3 carbon atoms, or phenyl;

$R^1$ is a polyvalent organic group having a valance of n that is the residue of an organic polyol having n hydroxyl groups that remain after the removal of n hydroxyl groups, the organic polyol being selected from saturated linear, branched, and cyclic aliphatic polyols having 2 to 10 carbon atoms and optionally one to three catenary (i.e., O backbone) oxygen atoms or -CO- groups and from aromatic polyols having 6 to 12 carbon atoms; and n is an integer having a value of 2 to 6.

11. A coated substrate comprising a substrate having adhered to at least one surface thereof a crosslinked polymeric coating derived from the coating composition of claim 7.